# EUROPEAN PATENT APPLICATION

(11) **EP 1 594 220 A1**
(43) Date of publication of application: **09.11.2005**
(21) Application number: 04709329.9
(22) Date of filing: 09.02.2004
(51) Int. Cl.: H02P 7/63

(54) **AC MOTOR CONTROL METHOD AND CONTROL DEVICE**

(30) Priority: 14.02.2003 JP 2003037390
(71) Applicant: KABUSHIKI KAISHA YASKAWA DENKI, Kitakyushu-Shi, Fukuoka 806-0004 (JP)
(72) Inventor: IURA, Hideaki, c/o Kabushiki Kaisha Yaskawa Denki, Kitakyushu-shi, Fukuoka 8060004 (JP); YAMAMOTO, Yoichi, c/o K.K. Yaskawa Denki, Kitakyushu-shi, Fukuoka 8060004 (JP)
(74) Representative: Grünecker, Kinkeldey, Stockmair & Schwanhäusser Anwaltssozietät
(86) International application number: PCT/JP2004/001342
(87) International publication number: WO 2004/082123

(57) **Abstract**

The present invention provides a control method and a controller for an AC motor in which the AC motor can be continuously operated without using a device for returning a regenerative resistance or a regenerative energy to a power source and without raising the voltage of a main circuit to an over-voltage level.

The control method and the controller for the AC motor includes a power converter (1) for outputting electric power to the AC motor (5); a torque limiting unit (6) for limiting a torque command relative to an arbitrary torque command; a voltage command calculating circuit (7) for calculating a voltage command on the basis of the torque command limited by the torque limiting unit (6) to control the electric power of the power converter (1) and a switching pattern generating circuit (8). The main circuit voltage of the power converter (1) is detected by a voltage detector (9). The torque limit value of a regenerative side is calculated in accordance with the level of the detected value in a regenerative side torque limit value calculating circuit (10) and set as the limit value of the torque limiting unit (6).

## Description

### [Technical Field]

The present invention relates to a control method and a controller for an AC motor that suppresses the rise of the voltage of a main circuit by a regenerative energy and continuously operates the AC motor in a power converter that does not include a device for returning a regenerative resistance or the regenerative energy to a power source.

### [Related Art]

In driving an induction motor using an inverter, when a speed command that is externally inputted to the inverted changes, a speed at which the induction motor is driven is ordinarily linearly changed for a preset accelerating time or a decelerating time. In such a linear acceleration and deceleration, when the value of a load is constant and there is only an inertial load such as an inertia, torque necessary for the acceleration and deceleration may have a prescribed value without a special problem. However, actually, the magnitude of the load driven by the inverter may frequently change or the load may not be completely composed only of the inertial load. When the magnitudes of the loads vary or other loads than the inertial load are to be accelerated or decelerated by a linear speed change, it unnecessarily takes long time to accelerate or decelerate the loads. Thus, productivity is deteriorated or an output current value or the voltage value of a main circuit becomes excessively large, so that the inverter may sometimes stop for the purpose of protection.

To perform an optimum acceleration or deceleration corresponding to the kind or the magnitude of the load, for instance, JP-A-Hei08-172796 (Patent Document 1) disclosed a method in which the output current information of a power converter and the voltage information of a main circuit and an output speed command at a current time are previously processed in the power converter that does not include a device for returning a regenerative resistance or a regenerative energy to a power source and an acceleration and deceleration rate is formed from the output of a neural network to perform an operation without raising the voltage of the main circuit.

Further, JP-A-Hei08-172797 (Patent Document 2) discloses an inverter device for rotating a motor at an arbitrary speed that includes a load data setting unit for setting information related to a load, a load data recording unit for recording load data set by the load data setting unit, an acceleration and deceleration pattern forming unit for forming an acceleration and deceleration pattern upon accelerating and decelerating the motor in accordance with the load data recorded by the load data recording unit, an acceleration and deceleration pattern recording unit for recording the acceleration and deceleration pattern, and an output speed control unit for controlling the driving speed of the motor from the acceleration and deceleration pattern recorded in the acceleration and deceleration pattern recording unit and an externally applied speed command.

Further, JP-A-Hei10-257788 (Patent Document 3) discloses a control method for a motor by an inverter in which the voltage of a direct current bus of the inverter is detected and the limit value of a torque limiter in a regenerative side is reduced in accordance with the rise of the voltage of the direct current bus of the inverter upon deceleration in the control method for the motor that includes a power converter including the inverter, a speed controller and a control part including the torque limiter to prevent the over-voltage of the direct current bus due to the rise of the voltage of the direct current bus with good response characteristics and without a complicated calculation.

However, in the usual methods disclosed in the Patent Documents 1 to 3, the rise of the voltage of the main circuit (the voltage of the direct current bus) can be suppressed upon sudden acceleration and deceleration, however, an effect cannot be achieved in a use in which the speed of an AC motor is increased by the regenerative energy of a load like a machine such as a press.

Ordinarily, since torque outputted by an AC motor is limited by any of a machine to which the AC motor is connected, the AC motor or the power converter relative to an arbitrary torque command, the torque limit value of a motor side and the torque limit value of the regenerative side are previously set. Then, the AC motor is controlled within the torque limit.

However, when the AC motor is suddenly accelerated or decelerated or in a use in which a speed is increased by a gravity load or a load machine, the AC motor generates a regenerative torque and the regenerative energy thereof returns to the AC motor to raise the voltage of the main circuit. Accordingly, the voltage of the main circuit needs to be prevented from rising higher than an arbitrarily set level. Generally, a device is used in which a resistance is connected in parallel with a smoothing capacitor of the main circuit to return the regenerative resistance or the regenerative energy consuming a power by the resistance to the power source.

However, when the device for returning the regenerative resistance or the regenerative energy to the power source, a structure undesirably becomes complicated and a cost is disadvantageously increased.

### [Disclosure of the Invention]

Thus, it is an object of the present invention to provide a control method and a controller for an AC motor in which the AC motor can be continuously operated without using a device for returning a regenerative resistance or a regenerative energy to a power source and without raising the voltage of a main circuit to an over-voltage level.

In order to achieve the above-described object, the invention defined in claim 1 provides a control method for an AC motor including; a power converter for outputting electric power to the AC motor; a torque limiting unit for limiting a torque command to an arbitrary torque command; and a unit for calculating a voltage command on the basis of the torque command limited by the torque limiting unit to control the electric power of the power converter, the control method including the steps of: calculating the torque limit value of a regenerative side in accordance with the level of the detected value of the voltage of a main circuit of the power converter, and setting the calculated torque limit value as a limit value of the torque limit unit.

Further, the invention defined in claim 2 provides a controller for an AC motor including: a power converter for outputting electric power to the AC motor; a torque limiting unit for limiting a torque command to an arbitrary torque command; a unit for calculating a voltage command on the basis of the torque command limited by the torque limiting unit to control the electric power of the power converter; and a regenerative side torque limit value calculating unit for calculating the torque limit value of a regenerative side in accordance with the level of the detected value of the voltage of a main circuit of the power converter and setting the calculated torque limit value to the torque limit unit.

In the invention defined in claims 1 and 2, the voltage of the main circuit is monitored and the torque limit value of the regenerative side is controlled in accordance with the level of the voltage of the main circuit so that the regenerative energy returning to the power converter is suppressed. Accordingly, even in the power converter having no device for returning the regenerative resistance or the regenerative energy to the power source, the voltage of the main circuit does not rise to an over-voltage level and the AC motor can be continuously operated.

As described above, according to the control method and the controller for the AC motor of the present invention, the voltage of the main circuit is monitored and the torque limit value of the regenerative side is controlled in accordance with the level of the voltage of the main circuit so that the regenerative energy returning to the power converter is suppressed. Accordingly, even in the power converter having no device for returning the regenerative resistance or the regenerative energy to the power source, the voltage of the main circuit does not rise to an over-voltage level and the AC motor can be continuously operated.

### [Brief Description of the Drawings]

Fig. 1 is a block diagram showing the structure of an embodiment of a controller for anAC motor in the present invention.
Fig. 2 is an explanatory view showing a relation between the voltage of a main circuit and a torque limit value of a regenerative side in the present invention.

### [Best Mode for Carrying Out the Invention]

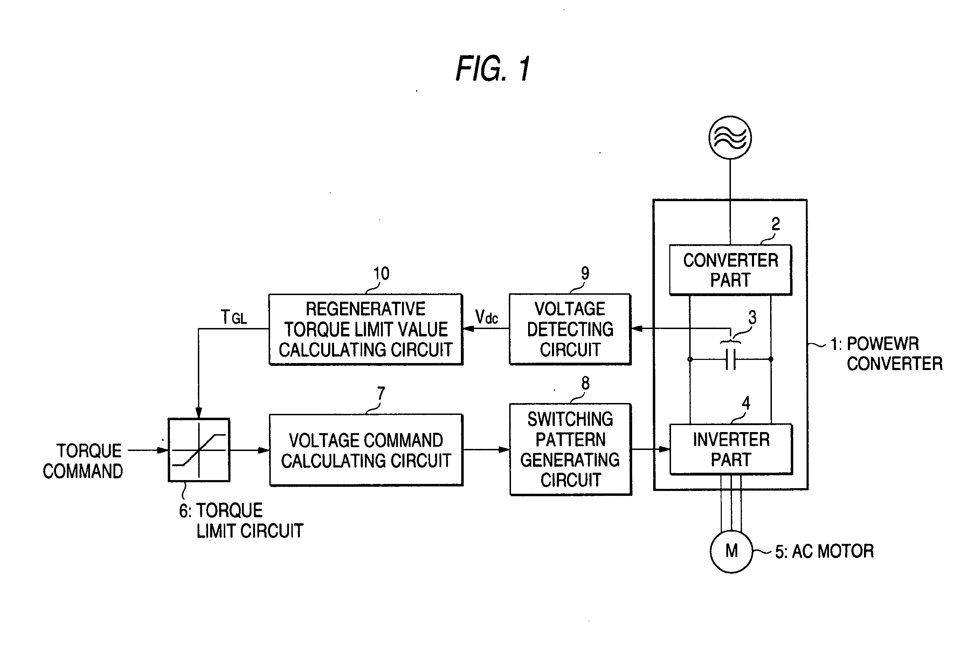

Now, an embodiment of the present invention will be described by referring to the drawings. Fig. 1 is a block diagram showing the structure of an embodiment of a controller for an AC motor in the present invention.

The controller for the motor in this embodiment includes a power converter 1 for outputting electric power to an AC motor 5, the AC motor 5 driven by the power converter 1, a torque limit circuit 6 for limiting a torque command, a voltage command calculating circuit 7 for calculating a voltage command on the basis of the limited torque command, a switching pattern generating circuit 8 for forming a switching pattern supplied to an inverter part 4 in the power converter 1 on the basis of the voltage command, a voltage detecting circuit 9 for detecting the voltage of a main circuit of the power converter 1 and a regenerative side torque limit value calculating circuit 10 for calculating a regenerative side torque limit value on the basis of the detected voltage of the main circuit.

Further specifically described, the power converter 1 includes a converter part 2 for converting three-phase alternating current to DC voltage by a power element, a smoothing capacitor 3 for smoothing the converted voltage and the inverter part 4 for converting the DC voltage to alternating current having an arbitrary frequency and voltage by a PWM control system. The power converter 1 supplies the electric power to the AC motor 5.

The torque limit circuit 6 limits the torque command so as to be located between a previously set torque limit value of a motor side and the torque limit value of a regenerative side relative to an arbitrary torque command.

The voltage command calculating circuit 7 calculates and outputs the voltage command so that a torque is outputted on the basis of the torque command outputted from the torque limit circuit 6.

The switching pattern generating circuit 8 determines the switching pattern of the power converter 1 from the output of the voltage command calculating circuit 7.

The voltage detecting circuit 9 detects a main circuit voltage V_{dc} as the voltage of the smoothing capacitor 3.

The regenerative side torque limit value calculating circuit 10 is a circuit for calculating the regenerative side torque limit value T_{GL} from the main circuit voltage V_{dc} as the output value of the voltage detecting circuit 9 and setting the regenerative side torque limit value to the torque limit circuit 6.

Ordinarily, since the torque outputted by the AC motor 5 is limited by any of a machine to which the AC motor 5 is connected, the AC motor 5 or the power converter 1 relative to the arbitrary torque command, a torque limit value T_{L0} of a motor side and a torque limit value T_{G0} of a regenerative side are previously set. Then, the AC motor 6 is controlled within the torque limits.

When the AC motor 5 is suddenly accelerated or decelerated or when a speed is increased by a gravity load or a load machine, the AC motor 5 generates a regenerative torque and the regenerative energy thereof returns to the power converter 1 to raise the voltage of the main circuit. Accordingly, the voltage of the main circuit needs to be prevented from rising higher than an arbitrarily set level.

In this embodiment, to suppress the rise of the main circuit voltage V_{dc}, the torque limit value of the regenerative side is restricted in accordance with the level of the main circuit voltage V_{dc} so that the regenerative torque is not generated and the regenerative energy is not returned to the power converter 1.

Thus, the speed control accuracy of the AC motor is consequently temporarily deteriorated. However, a merit resides in a case in which a speed accuracy is not taken preferentially and an importance is attached to a fact that a device is not used for returning the regenerative resistance or the regenerative energy to a power source.

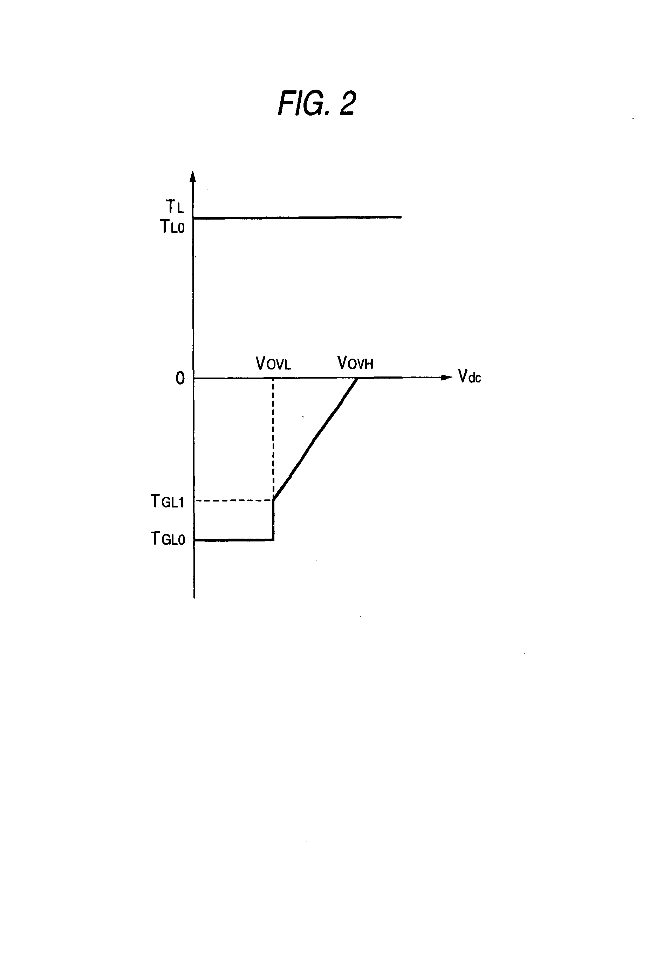

Specifically, as an example of a method for restricting the torque limit of the regenerative side, a relation between the main circuit voltage and the torque limit value of the regenerative side as shown in Fig. 2 is defined to control the torque limit value of the regenerative side in accordance with the level of the main circuit voltage. As the torque limit of the motor side, the previously set T_{L0} is the limit value irrespective of the magnitude or the level of the main circuit voltage V_{dc}. On the other hand, as the torque limit value of the regenerative side, when the main circuit voltage V_{dc} is lower than V_{OVL}, the torque limit value is the previously set torque limit value T_{G0} of the regenerative side. When the main circuit voltage is not lower than a V_{OVH} level, the torque limit value is set to 0 so that the regenerative torque is not generated. Further, when the main circuit voltage is not lower than V_{OVL} and lower than V_{OVH}, the torque limit value of the regenerative side is proportional to the main circuit voltage V_{dc} and is lowered to 0 from an arbitrarily set torque limit value T_{GL1}. Since the torque limit value is set as described above, as the main circuit voltage rises higher than V_{OVL}, the torque limit value of the regenerative side is more restricted. Accordingly, as the main circuit voltage rises higher, the main circuit voltage hardly rises more. Thus, an over-voltage is avoided and an operation can be continued.

When the present invention is actually applied at the time of a sudden deceleration command, if the main circuit voltage is not higher than the V_{OVL} level during the sudden deceleration, the speed is reduced at a commanded deceleration rate. However, when the main circuit voltage is not lower than the V_{OVL}, as the main circuit voltage rises higher, the torque limit of the regenerative side is more restricted. Accordingly, the deceleration rate is gradually moderated and the speed is reduced at a regenerative level that can be absorbed by the power converter. Thus, the speed can be smoothly reduced.

Now, a case in which the speed of the AC motor is raised from a load side will be described below. The speed is controlled so that the regenerative torque is outputted and the speed accuracy is maintained until the main circuit voltage rises to the V_{OVL} level. However, when the main circuit voltage reaches the V_{OVL} level or higher, the speed of the AC motor tries to be increased the more, because the torque limit value of the regenerative side is restricted so that the main circuit voltage does not rises more. Here, the torque limit value of the regenerative side is restricted in accordance with the level of the main circuit voltage V_{dc} so as not to generate the regenerative torque. Thus, the main circuit voltage does not rise more and the operation of the AC motor can be smoothly carried out. When the main circuit voltage falls, the torque limit value of the regenerative side is immediately widened. Thus, the regenerated torque is generated so that the speed can be made to correspond to each other. As described above, when the torque limit value of the regenerative side is controlled in accordance with the level of the main circuit voltage, if the main circuit voltage rises, the speed accuracy is deteriorated, however, the smooth operation of the AC motor can be continuously carried out without generating the over-voltage, in the power converter having no device for returning the regenerative resistance or the regenerative energy to the power source.

In this embodiment, the relation between the main circuit voltage and the torque limit value of the regenerative side is shown in Fig. 2. However, the arbitrarily set torque limit value T_{GL1} may be made to correspond to the torque limit value T_{GL0} of the regenerative side. Further, not only the torque limit value is proportional to the main circuit voltage, but also any of functions that when the main circuit value rises, the torque limit value of the regenerative side comes near to 0 may be utilized. Further, a method is desired in which a next main circuit voltage is anticipated from the relation between the inertia of a machine or the capacity of the smoothing capacitor and the regenerative torque to restrict the torque limit value of the regenerative side.

### [Industrial Applicability]

The present invention relates to a control method and a controller for an AC motor that suppress the rise of a main circuit voltage by a regenerative energy and continuously operate the AC motor (an induction motor, a synchronous motor) in a power converter having no device for returning a regenerative resistance or the regenerative energy to a power source.

## Claims

1. A control method for an AC motor including; a power converter for outputting electric power to the AC motor; a torque limiting unit for limiting a torque command to an arbitrary torque command; and a unit for calculating a voltage command on the basis of the torque command limited by the torque limiting unit to control the electric power of the power converter,
the control method comprising the steps of:
calculating the torque limit value of a regenerative side in accordance with the level of the detected value of the voltage of a main circuit of the power converter, and
setting the calculated torque limit value as a limit value of the torque limit unit.

2. A controller for an AC motor comprising:
a power converter for outputting electric power to the AC motor;
a torque limiting unit for limiting a torque command to an arbitrary torque command;
a unit for calculating a voltage command on the basis of the torque command limited by the torque limiting unit to control the electric power of the power converter; and
a regenerative side torque limit value calculating unit for calculating the torque limit value of a regenerative side in accordance with the level of the detected value of the voltage of a main circuit of the power converter and setting the calculated torque limit value to the torque limit unit.
